(19) Europäisches Patentamt / European Patent Office / Office européen des brevets

(11) **EP 4 269 360 A1**

(12) **EUROPEAN PATENT APPLICATION**
published in accordance with Art. 153(4) EPC

(43) Date of publication:
 **01.11.2023 Bulletin 2023/44**

(21) Application number: **21910987.3**

(22) Date of filing: **23.12.2021**

(51) International Patent Classification (IPC):
 $C01G\ 53/00$ (2006.01)  $H01M\ 4/505$ (2010.01)
 $H01M\ 4/525$ (2010.01)

(52) Cooperative Patent Classification (CPC):
 **C01G 53/00; H01M 4/505; H01M 4/525;**
 Y02E 60/10

(86) International application number:
 **PCT/JP2021/047968**

(87) International publication number:
 **WO 2022/138848 (30.06.2022 Gazette 2022/26)**

(84) Designated Contracting States:
 **AL AT BE BG CH CY CZ DE DK EE ES FI FR GB GR HR HU IE IS IT LI LT LU LV MC MK MT NL NO PL PT RO RS SE SI SK SM TR**
 Designated Extension States:
 **BA ME**
 Designated Validation States:
 **KH MA MD TN**

(30) Priority: **24.12.2020 JP 2020214752**

(71) Applicant: **Panasonic Intellectual Property Management Co., Ltd.**
 **Osaka-shi, Osaka 540-6207 (JP)**

(72) Inventors:
 • **ESAKI, Shogo**
  **Kadoma-shi, Osaka 571-0057 (JP)**
 • **NATSUI, Ryuichi**
  **Kadoma-shi, Osaka 571-0057 (JP)**
 • **MATSUSHITA, Junko**
  **Kadoma-shi, Osaka 571-0057 (JP)**
 • **HIBINO, Mitsuhiro**
  **Kadoma-shi, Osaka 571-0057 (JP)**
 • **NAKURA, Kensuke**
  **Kadoma-shi, Osaka 571-0057 (JP)**

(74) Representative: **Novagraaf International SA**
 **Chemin de l'Echo 3**
 **1213 Onex, Geneva (CH)**

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57) A positive electrode active material for nonaqueous electrolyte secondary batteries according to one embodiment of the present invention contains a lithium transition metal composite oxide which is represented by composition formula $Li_x Mn_y Ni_z Ti_a M_b O_{2-c} F_c$ (wherein M represents at least one element that is selected from among P, Co, Si, Sr, Nb, W, Mo, Ca, Mg, Sb, Na, B, V, Cr, Fe, Cu, Zn, Ge, Zr, Ru, K, Bi and Al; $1.0 < x \leq 1.2$; $0.4 \leq y \leq 0.8$; $0 \leq z \leq 0.4$; $0 < a \leq 0.03$; $0 \leq b \leq 0.05$; $0 < c \leq 0.1$; and $(x + y + z + a + b) \leq 2$).

EP 4 269 360 A1

Figure 1

**Description**

TECHNICAL FIELD

The present disclosure relates to a positive electrode active material for a non-aqueous electrolyte secondary battery and a non-aqueous electrolyte secondary battery using the positive electrode active material.

BACKGROUND ART

In a non-aqueous electrolyte secondary battery such as a lithium-ion battery, a positive electrode active material significantly affects battery performance such as input and output characteristics, a capacity, and durability. For the positive electrode active material, a lithium-transition metal composite oxide containing metal elements such as Ni, Co, Mn, and Al is commonly used. The kind and amount of the element to be added to the lithium-transition metal composite oxide significantly affect the battery performance. For example, only a slight change in the kind or amount of the additive elements may fail to achieve the target performance. Thus, many investigations have been made on the kind and amount of the additive elements of the lithium-transition metal composite oxide.

For example, Patent Literature 1 discloses a positive electrode active material represented by the composition formula $Li_xNi_{1-y}Co_{y-z}M_zO_{2-a}X_b$ (M represents Al alone, or alternatively includes Al as an essential element and includes one or more elements selected from the group consisting of group 13 elements and group 14 elements in the periodic table, Mn, Fe, Ti, Zr, Nd, La, Cu, V, Sm, W, Zn, Y, Mg, Sr, Ca, Ba, Cs, Na, and P, and X represents a halogen element). Patent Literature 1 describes that the use of the positive electrode active material can provide a lithium-ion secondary battery having excellent cycle performance and safety performance.

CITATION LIST

PATENT LITERATURE

PATENT LITERATURE 1: Japanese Patent No. 4197002

SUMMARY

TECHNICAL PROBLEM

A lithium-excess lithium-transition metal composite oxide, which has a mole ratio of Li to transition metals of more than 1, is expected as a next-generation positive electrode active material with a high capacity; however, a problem is that the transition metals are easily eluted. Although addition of F to the lithium-excess composite oxide is known to inhibit the elution of the transition metals and improve durability, further improvement of durability has been required.

It is an advantage of the present disclosure to provide a high-capacity positive electrode active material including the lithium-excess lithium-transition metal composite oxide, which improves the battery durability.

SOLUTION TO PROBLEM

A positive electrode active material for a non-aqueous electrolyte secondary battery of an aspect of the present disclosure includes a lithium-transition metal composite oxide represented by the composition formula $Li_xMn_yNi_zTi_aM_bO_{2-c}F_c$, wherein M represents at least one element selected from the group consisting of P, Co, Si, Sr, Nb, W, Mo, Ca, Mg, Sb, Na, B, V, Cr, Fe, Cu, Zn, Ge, Zr, Ru, K, Bi, and Al, $1.0 < x \leq 1.2$, $0.4 \leq y \leq 0.8$, $0 \leq z \leq 0.4$, $0 < a \leq 0.03$, $0 \leq b \leq 0.05$, $0 < c \leq 0.1$, and $x+y+z+a+b \leq 2$.

A non-aqueous electrolyte secondary battery of an aspect of the present disclosure comprises: a positive electrode including the above positive electrode active material; a negative electrode; a separator interposed between the positive electrode and the negative electrode; and a non-aqueous electrolyte.

ADVANTAGEOUS EFFECT OF INVENTION

According to the positive electrode active material of an aspect of the present disclosure, the cycle characteristics of the battery can be improved and the durability can be improved.

BRIEF DESCRIPTION OF DRAWING

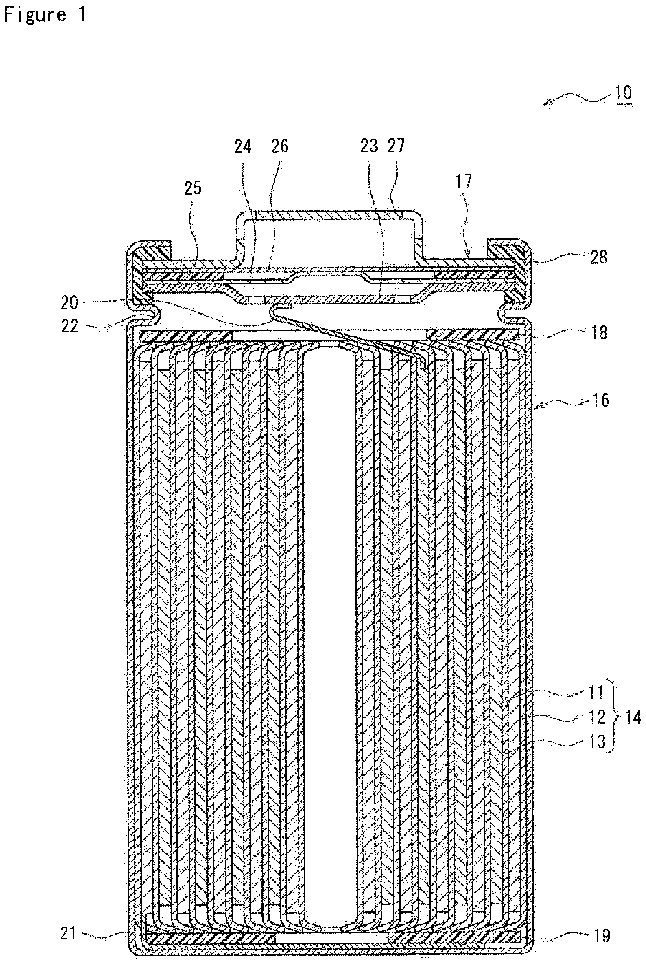

FIG. 1 is a sectional view of a non-aqueous electrolyte secondary battery of an example of an embodiment.

DESCRIPTION OF EMBODIMENTS

As noted above, addition of F to the lithium-excess lithium-transition metal composite oxide inhibits the elution of the transition metals and improves the battery durability; however, further improvement of the durability has been required. The present inventors have been made intensive investigation to solve this problem, and consequently found that the battery durability is specifically improved by adding Ti to a lithium-excess F-containing composite oxide containing at least Mn as a transition metal. Specifically, it has been found that the durability is more remarkably improved by adding Ti and a specific element M, preferably adding two or more elements M.

Hereinafter, an example of an embodiment of a positive electrode active material for a non-aqueous electrolyte secondary battery according to the present disclosure and a non-aqueous electrolyte secondary battery using this positive electrode active material will be described in detail with reference to the drawing. It is anticipated from the beginning to selectively combine a plurality of embodiments and modified examples described below.

Hereinafter, a cylindrical battery in which a wound electrode assembly 14 is housed in a bottomed cylindrical exterior housing can 16 will be exemplified, but the exterior is not limited to a cylindrical exterior housing can, and may be, for example, a rectangular exterior housing can (rectangular battery), may be a coin-shaped exterior housing can (coin-shaped battery), or may be an exterior composed of laminated sheets including a metal layer and a resin layer (laminate battery). The electrode assembly is not limited to a wound electrode assembly, and may be a stacked electrode assembly in which a plurality of positive electrodes and a plurality of negative electrodes are alternately stacked with a separator interposed therebetween.

FIG. 1 is a sectional view of a non-aqueous electrolyte secondary battery 10 of an example of an embodiment. As exemplified in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced by a halogen atom such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as $LiPF_6$ is used, for example. The non-aqueous electrolyte is not limited to a liquid electrolyte, and may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The two separators 13 are formed to be one size larger than at least the positive electrode 11, and disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17, and thereby sealability inside the battery is ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically a positive electrode active material constituting the positive electrode 11, will be described in detail.

[Positive Electrode]

The positive electrode 11 has a positive electrode core and a positive electrode mixture layer provided on a surface of the positive electrode core. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder, and preferably provided on both surfaces of the positive electrode core. The positive electrode 11 may be produced by, for example, applying a positive electrode mixture slurry including the positive electrode active material, the conductive agent, the binder, and the like on the positive electrode core, and drying and then compressing the coating to form the positive electrode mixture layers on both the surfaces of the positive electrode core.

Examples of the conductive agent included in the positive electrode mixture layer include carbon materials such as carbon black, acetylene black, Ketjenblack, and graphite. Examples of the binder included in the positive electrode mixture layer include a fluororesin such as polytetrafluoroethylene (PTFE) and polyvinylidene fluoride (PVdF), polyacrylonitrile (PAN), a polyimide resin, an acrylic resin, and a polyolefin resin. With these resins, cellulose derivatives such as carboxymethylcellulose (CMC) or a salt thereof, polyethylene oxide (PEO), and the like may be used in combination.

The positive electrode active material includes a lithium-transition metal composite oxide represented by the composition formula $Li_xMn_yNi_zTi_aM_bO_{2-c}F_c$, wherein M represents at least one element selected from the group consisting of P, Co, Si, Sr, Nb, W, Mo, Ca, Mg, Sb, Na, B, V, Cr, Fe, Cu, Zn, Ge, Zr, Ru, K, Bi, and Al, $1.0 < x \leq 1.2$, $0.4 \leq y \leq 0.8$, $0 \leq z \leq 0.4$, $0 < a \leq 0.03$, $0 \leq b \leq 0.05$, $0 < c \leq 0.1$, and $x+y+z+a+b \leq 2$. This composite oxide contains Li, Mn, Ti, and F as essential elements, is a Li-excess material, which has a mole ratio of Li to the transition metals is more than 1, and is a composite oxide in which a predetermined amount of fluoride ions is introduced to replace some of O with F.

The positive electrode active material includes the composite oxide represented by the above composition formula as a main component. Here, the main component means a component having the highest mass ratio in the constituents of the composite oxide. For the mixture layer of the positive electrode 11, a composite oxide other than the composite oxide represented by the above composition formula (for example, a composite oxide that is not Li-excess or a composite compound containing no fluoride ion) may be used in combination as the positive electrode active material, but the content of the above composite oxide is preferably greater than or equal to 50 mass%, and may be substantially 100 mass%. The composition of the composite oxide may be measured by using an ICP atomic emission spectrometer (iCAP6300, manufactured by Thermo Fisher Scientific K.K.).

The lithium-transition metal composite oxide represented by the above composition formula preferably contains Ni in addition to Li, Mn, and Ti. Ni contributes to a higher capacity. Adding Ti to the lithium-transition metal composite oxide represented by the above composition formula, preferably the composite oxide containing Ni, improves the battery durability, but the durability is more effectively improved in a case where the element M is present together with Ti. Thus, the composite oxide preferably contains at least one element M selected from the group consisting of P, Co, Si, Sr, Nb, W, Mo, Ca, Mg, Sb, Na, B, V, Cr, Fe, Cu, Zn, Ge, Zr, Ru, K, Bi, and Al as an essential element. Among them, Al, Sb, Sr, Si, Mg, Nb, P, and Ge are preferable.

In the composition formula $Li_xMn_yNi_zTi_aM_bO_{2-c}F_c$, the element M preferably represents at least two elements selected from the group consisting of P, Co, Si, Sr, Nb, W, Mo, Ca, Mg, Sb, Na, B, V, Cr, Fe, Cu, Zn, Ge, Zr, Ru, K, Bi, and Al. Among them, at least two elements selected from the group consisting of Al, Sb, Sr, Si, Mg, Nb, P, and Ge are preferable, and at least two elements selected from the group consisting of Al, Sb, Sr, Si, and Mg are more preferable. Adding the two or more elements M makes the effect of improving the durability more remarkable. When the two or more elements M are included, a total mole ratio of the elements M is less than or equal to 0.05 (0 < b ≤ 0.05).

In the composition formula $Li_xMn_yNi_zTi_aM_bO_{2-c}F_c$, the element M may be three elements including: two elements selected from Sb, Sr, Si, Mg, Nb, P, and Ge; and Al. That is, the composite oxide contains three elements M as essential elements. The three essential elements include: two elements selected from Sb, Sr, Si, Mg, Nb, P, and Ge, or two elements selected from Sb, Sr, Si, and Mg; and Al. Adding Ti and the three elements M into the lithium-transition metal composite oxide containing Mn, Ni, and F makes the effect of improving the durability more remarkable.

When the lithium-transition metal composite oxide contains two elements M, examples of preferable combinations of the elements M include (1) Al and Sr, (2) Al and Nb, (3) Al and Ge, (4) Al and Si, (5) Sr and Sb, (6) Sr and Nb, (7) Sr and Ge, and (8) Sr and Si. When the lithium-transition metal composite oxide contains three elements M, examples of preferable combinations of the elements M include (1) Al, Sr, and Si, (2) Al, Sb, and Si, (3) Al, Si, and Mg, (4) Sr, Sb, and Si, and (5) Sr, Sb, and Mg. The number of the elements M contained in the lithium-transition metal composite oxide may be, for example, greater than or equal to three, but preferably one or more and three or less, more preferably two or three, and particularly preferably three.

Since Co is particularly rare and expensive, the lithium-transition metal composite oxide may contain substantially no Co. Even using other element M instead of Co may yield the effect of improving the durability greater than or equal to that in the case of using Co.

In the composition formula $Li_xMn_yNi_zTi_aM_bO_{2-c}F_c$, a mole ratio of Li (x) is 1.0 < x ≤ 1.2, and preferably 1.1 ≤ x ≤ 1.2. A mole ratio of Mn (y) is 0.4 ≤ y ≤ 0.8, and preferably 0.45 ≤ y ≤ 0.60. The mole ratios of Li and Mn within the above ranges easily achieve both of the high durability and the high capacity. Although Ni is an optional component, Ni is preferably contained at an amount smaller than that of Mn, for example. From the viewpoint of achievement of both of the high durability and the high capacity, the content (mole ratio) of Ni is preferably 0.05 ≤ z ≤ 0.3.

In the composition formula $Li_xMn_yNi_zTi_aM_bO_{2-c}F_c$, the total mole amount of Li, Mn, Ni, Ti, and the element M (x+y+z+a+b) is less than or equal to 2, and preferably 2. That is, the above composite oxide is a Li-excess composite oxide, and preferably not a cation-excess composite oxide. A mole ratio of F (c) is less than or equal to 0.1 (0 < c ≤ 0.1), and preferably 0.05 ≤ x ≤ 0.085. The content of F within the above range can sufficiently inhibit the elution of the transition metals with keeping the high capacity, and contributes to the improvement of the durability.

In the composition formula $Li_xMn_yNi_zTi_aM_bO_{2-c}F_c$, a mole ratio of Ti (a) is less than or equal to 0.03 (0 < a ≤ 0.03), and preferably 0.002 ≤ a ≤ 0.02, or 0.002 ≤ a ≤ 0.01 or 0.002 ≤ a ≤ 0.005. Although Ti contributes to the improvement of the durability even at a small amount, the effect of improving the durability is more remarkable when Ti is present at greater than or equal to 0.2 mol% relative to the total number of moles of the elements excluding Li, O, and F. On the other hand, an excessively high content of Ti has a limit for the effect of improving the durability, and may affect other battery performance such as the capacity. To efficiently improve the durability, the upper limit of the content is preferably 2 mol%, 1 mol%, or 0.5 mol%.

In the composition formula $Li_xMn_yNi_zTi_aM_bO_{2-c}F_c$, a mole ratio of the element M (b) is preferably less than or equal to 0.05 (0 < b ≤ 0.05), and more preferably less than or equal to 0.04 (0 < b ≤ 0.04) or less than or equal to 0.03 (0 < b ≤ 0.03). As noted above, when a plurality of kinds of the elements M is included, the total mole ratio of the elements M is less than or equal to 0.05. In this case, the durability may be improved more efficiently. When a plurality of kinds of the elements M is included, a mole ratio of each element M is preferably less than or equal to 0.015, less than or equal to 0.01, or less than or equal to 0.005, which slightly differs depending on the kind of the element. Although the element M contributes to the improvement of the durability even at a small amount by added together with Ti, the effect of improving the durability is more remarkable when the element M is present at greater than or equal to 0.2 mol% relative to the total number of moles of the elements excluding Li, O, and F.

In the lithium-transition metal composite oxide represented by the above composition formula, the ratios (mole ratios) of the contents of Ti and element M are not particularly limited, but preferable ratios slightly differ depending on the kind of the element M and the like. The mole ratios of Ti and each element M may be substantially same, for example. When two or more elements M are contained, the total number of moles of the elements M is preferably larger than the number of moles of Ti. When Al is included as the element M, the number of moles of Al is set to be larger than or equal to the number of moles of Ti, and to be larger than the number of moles of the other element M, for example. The lithium-transition metal composite oxide may contain an element other than Li, Mn, Ni, Ti, the element M, O, and F within a range not impairing the object of the present disclosure.

The lithium-transition metal composite oxide is of, for example, secondary particles formed by aggregation of a plurality of primary particles. An example of a median diameter (D50) on a volumetric basis of the lithium-transition metal composite oxide is greater than or equal to 1 μm and less than or equal to 20 μm, or greater than or equal to 2 μm and less than or equal to 15 μm. The D50 is a particle diameter at which a volumetric integrated value is 50% in a particle size distribution measured by a laser diffraction-scattering method. A BET specific surface area of the lithium-transition metal composite oxide is, for example, greater than or equal to 1.0 mm²/g and less than or equal to 4.0 mm²/g. The BET specific surface area within the above range easily achieves both of the high durability and the high capacity. The BET specific surface area is measured in accordance with a BET method (nitrogen adsorption method) described in JIS R1626.

The lithium-transition metal composite oxide represented by the above composition formula may be synthesized by, for example, mixing a carbonate salt containing Mn and Ni, a compound containing Ti, a compound containing the element M, and lithium fluoride (LiF), and calcining the mixture. An example of the calcining condition is greater than or equal to 700°C and less than or equal to 900°C × greater than or equal to 10 hours and less than or equal to 30 hours. The compound containing Ti may be added, after the other components are mixed and calcined, into the calcined product. In this case, Ti is likely to unevenly present on particle surfaces of the lithium-transition metal composite oxide.

Examples of the compound containing Ti include titanium oxide. Examples of the compound containing the element M include diantimony trioxide, aluminum oxide, magnesium oxide, niobium oxide, silicon oxide, germanium oxide, cobalt sulfate, lithium phosphate, and diphosphorus pentoxide.

As noted above, the positive electrode active material includes the lithium-transition metal composite oxide represented by the composition formula $Li_xMn_yNi_zTi_aM_bO_{2-c}F_c$ as a main component. This composite oxide preferably contains Ni and the element M as essential elements. The element M preferably represents two or more elements selected from Al, Sb, Sr, Si, Mg, Nb, P, and Ge, and more preferably three elements selected from Al, Sb, Sr, Si, Mg, Nb, P, and Ge, or three elements selected from Al, Sb, Sr, Si, and Mg. An example of a preferable range of the content of Ti is greater than or equal to 0.2 mol% and less than or equal to 1 mol%, and an example of a preferable range of the total content of the elements M is greater than or equal to 0.2 mol% and less than or equal to 2 mol%, relative to the total number of moles of the elements excluding Li, O, and F.

[Negative Electrode]

The negative electrode 12 has a negative electrode core and a negative electrode mixture layer provided on a surface of the negative electrode core. For the negative electrode core, a foil of a metal stable within a potential range of the negative electrode 12, such as copper, a film in which such a metal is disposed on a surface layer thereof, and the like may be used. The negative electrode mixture layer includes a negative electrode active material and a binder, and preferably provided on both surfaces of the negative electrode core. The negative electrode 12 may be produced by, for example, applying a negative electrode mixture slurry including the negative electrode active material, a conductive agent, the binder, and the like on the surfaces of the negative electrode core, drying and then compressing the coating to form the negative electrode mixture layers on both the surfaces of the negative electrode core.

The negative electrode mixture layer includes, for example, a carbon-based active material that reversibly occludes and releases lithium ions as the negative electrode active material. A preferable carbon-based active material is graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material constituted with at least one of Si and a Si-containing compound may be used, and the carbon-based active material and the Si-based active material may be used in combination.

For the conductive agent included in the negative electrode mixture layer, a carbon material such as carbon black, acetylene black, Ketjenblack, and graphite may be used as in the case of the positive electrode 11. For the binder included in the negative electrode mixture layer, a fluororesin, PAN, a polyimide, an acrylic resin, a polyolefin, and the like may be used as in the case of the positive electrode 11, but styrene-butadiene rubber (SBR) is preferably used. The negative electrode mixture layer preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination.

[Separator]

For the separator 13, a porous sheet having an ion permeation property and an insulation property is used. Specific examples of the porous sheet include a fine porous thin film, a woven fabric, and a nonwoven fabric. For a material of the separator 13, a polyolefin such as polyethylene, polypropylene, and a copolymer of ethylene and an α-olefin, cellulose, and the like are preferable. The separator 13 may have any of a single-layered structure and a stacked structure. On a surface of the separator 13, a heat-resistant layer including inorganic particles, a heat-resistant layer constituted with a highly heat-resistant resin such as an aramid resin, a polyimide, and a polyamideimide, and the like may be formed.

EXAMPLES

Hereinafter, the present disclosure will be further described with Examples, but the present disclosure is not limited to these Examples.

<Example 1>

[Synthesis of Lithium-Transition Metal Composite Oxide]

A carbonate salt containing Mn and Ni at a mole ratio of 2:1, titanium oxide, lithium carbonate, and lithium fluoride were mixed, and the mixture was calcined in air at 800°C for 20 hours to obtain a lithium-transition metal composite oxide represented by the composition formula $Li_{1.167}Mn_{0.550}Ni_{0.275}Ti_{0.008}O_{1.958}F_{0.042}$.

[Production of Positive Electrode]

As a positive electrode active material, the above lithium-transition metal composite oxide was used. The positive electrode active material, acetylene black, and polyvinylidene fluoride were mixed at a solid content mass ratio of 7:2:1, and N-methyl-2-pyrrolidone (NMP) was used as a dispersion medium to prepare a positive electrode mixture slurry. Then, the positive electrode mixture slurry was applied on a positive electrode core made of aluminum foil, the coating was dried and compressed, and then cut to a predetermined electrode size to obtain a positive electrode.

[Preparation of Non-Aqueous Electrolyte Liquid]

Ethylene carbonate (EC), ethyl methyl carbonate (EMC), and dimethyl carbonate (DMC) were mixed at a predetermined volume ratio. Into this mixed solvent, $LiPF_6$ was added to obtain a non-aqueous electrolyte liquid.

[Production of Test Cell]

The above positive electrode and a negative electrode composed of lithium metal foil were oppositely disposed with a separator interposed therebetween to constitute an electrode assembly, and the electrode assembly was housed in a coin-shaped exterior housing can. The non-aqueous electrolyte liquid was injected into the exterior housing can, and then the exterior housing can was sealed to obtain a coin-shaped test cell (non-aqueous electrolyte secondary battery).

<Examples 2 to 15 and Comparative Examples 3 to 12>

Test cells were produced in the same manner as in Example 1 except that, in the synthesis of the lithium-transition metal composite oxide: a compound containing an element M was mixed so that contents of Ti and element M were values shown in Table 1; and the kind of the raw material and mixing ratio of the raw materials were appropriately changed (the content rates of Li, Ni, Mn, O, and F were same as those in Example 1). As the compound each containing Co, P, Sb, Sr, Si, and Mg, an oxide was used.

<Comparative Example 1>

A test cell was produced in the same manner as in Example 1 except that, in the synthesis of the lithium-transition metal composite oxide, titanium oxide was not added.

<Comparative Example 2>

A test cell was produced in the same manner as in Example 1 except that, in the synthesis of the lithium-transition metal composite oxide, titanium oxide and lithium fluoride were not added.

A capacity maintenance rate of each of the test cells of Examples and Comparative Examples was evaluated by the following method. Table 1 shows the evaluation result together with the contents of Ti and element M in the positive electrode active material.

[Evaluation of Capacity Maintenance Rate]

From a discharge electric energy E1 after the 1st cycle (initial discharge electric energy) and a discharge electric energy E22 after the 22nd cycle of the following cycle test, the capacity maintenance rate was calculated by the following formula.

$$\text{Capacity Maintenance Rate} = (E22/E1)$$

<Cycle Test>

Under a temperature environment at 25°C, (1) the test cell was charged at a constant current of 0.05 C until a battery voltage reached 4.7 V, and charged at a constant voltage of 4.7 V until a current value reached 0.025 C, (2) then rested for 20 minutes, (3) subsequently discharged at 0.05 C until the battery voltage reached 2.5 V, and (4) finally rested for 20 minutes. These steps (1) to (4), specified as one charge-discharge cycle, were repeated 22 times.

[Table 1]

| | Added element | Amounts of Ti and M added (mol%) | | Capacity maintenance rate | remarks |
|---|---|---|---|---|---|
| | | Ti | Co | | |
| Example 1 | Ti | 1.0 | | 0.921 | |
| Comparative Example 1 | - | | | 0.915 | |
| Comparative Example 2 | - | | | 0.914 | notcontaining F |
| Comparative Example 3 | Co | | 1.0 | 0.920 | |
| Comparative Example 4 | Co | | 0.25 | 0.912 | |

[Table 2]

| | Added element | Amounts of Ti and M added (mol%) | | | | Capacity maintenance rate |
|---|---|---|---|---|---|---|
| | | Ti | Al | Sb | P | |
| Example 2 | TiAl | 1.0 | 1.0 | | | 0.931 |
| Example 3 | TiAl | 0.25 | 1.0 | | | 0.930 |
| Example 4 | TiAl | 0.50 | 0.25 | | | 0.915 |
| Example 5 | TiSb | 0.25 | | 0.25 | | 0.916 |
| Example 6 | TiP | 0.25 | | | 0.25 | 0.930 |
| Comparative Example 9 | AlP | | 0.25 | | 0.25 | 0.909 |
| Comparative Example 10 | AlSb | | 0.25 | 0.8 | | 0.906 |

[Table 3]

| | Added element | Amounts of Ti and M added (mol%) | | | | | | | Capacity maintenance rate |
|---|---|---|---|---|---|---|---|---|---|
| | | Ti | Al | Sr | Sb | Nb | Ge | Si | |
| Example 7 | TiAlSb | 0.25 | 0.25 | | 0.25 | | | | 0.926 |
| Example 8 | TiAlSr | 0.25 | 0.25 | 0.25 | | | | | 0.933 |
| Example 9 | TiSbSr | 0.25 | | 0.25 | 0.25 | | | | 0.932 |
| Example 10 | TiSrGe | 0.25 | | 0.25 | | | 0.25 | | 0.935 |
| Example 11 | TiSrNb | 0.25 | | 0.25 | | 0.50 | | | 0.934 |
| Example 12 | TiSrNb | 0.25 | | 0.25 | | 0.25 | | | 0.930 |
| Example 13 | TiSrNb | 0.25 | | 0.50 | | 0.25 | | | 0.931 |
| Example 14 | TiSrSi | 0.25 | | 0.25 | | | | 0.25 | 0.935 |

(continued)

| | Added element | Amounts of Ti and M added (mol%) | | | | | | | Capacity maintenance rate |
| --- | --- | --- | --- | --- | --- | --- | --- | --- | --- |
| | | Ti | Al | Sr | Sb | Nb | Ge | Si | |
| Example 15 | TiSrSi | 0.25 | | | | 0.25 | | 0.50 | 0.932 |
| Comparative Example 11 | AlSrSb | | 0.25 | 0.25 | 0.25 | | | | 0.919 |
| Comparative Example 12 | SrSbNb | | | 0.25 | 0.25 | 0.25 | | | 0.916 |

[Table 4]

| | Added element | Amounts of Ti and M added (mol%) | | | | | | | | | Capacity maintenance rate |
|---|---|---|---|---|---|---|---|---|---|---|---|
| | | Ti | Al | Co | P | Sb | Sr | Si | Mg | Nb | |
| Example 16 | TiAlSrSi | 1.0 | 1.0 | | | | 0.50 | 0.50 | | | 0.944 |
| Example 17 | TiAlSbSr | 1.0 | 1.0 | | | 0.50 | 0.50 | | | | 0.944 |
| Example 18 | TiAlSiMg | 1.0 | 1.0 | | | | | 0.50 | 0.50 | | 0.941 |
| Example 19 | TiAlPMg | 1.0 | 1.0 | | 0.50 | | | | 0.50 | | 0.932 |
| Example 20 | TiAlPSr | 1.0 | 1.0 | | 0.50 | | 0.50 | | | | 0.933 |
| Example 21 | TiAlSrMg | 1.0 | 1.0 | | | | 0.50 | | 0.50 | | 0.931 |
| Example 22 | TiAlSrNb | 1.0 | 1.0 | | | | 0.50 | | | 0.50 | 0.933 |
| Comparative Example 5 | AlCoSbP | | 0.50 | 0.75 | 0.25 | 0.25 | | | | | 0.926 |
| Comparative Example 6 | AlCoSbP | | 0.50 | 0.50 | 0.25 | 0.25 | | | | | 0.929 |
| Comparative Example 7 | AlCoSbP | | 0.50 | 0.25 | 0.25 | 0.25 | | | | | 0.924 |
| Comparative Example 8 | AlCoSbP | | 0.75 | 0.75 | 0.25 | 0.25 | | | | | 0.927 |

As shown in Table 1, the test cell of Example 1 has a higher capacity maintenance rate than the test cells of Comparative Examples 1 to 4, and excellent cycle characteristics. As understood from Comparative Examples 1 and 2, addition of F to the lithium-transition metal composite oxide containing Mn and Ni improves the capacity maintenance rate of the test cell using the oxide, but the improving effect is low compared with the effect of the case of using the composite oxide with added Ti (Example 1). The test cell of Example 1 yields a higher capacity maintenance rate than the case of using the composite oxide with added Co instead of Ti (Comparative Examples 3 and 4).

As shown in Table 2 to Table 4, using the lithium-transition metal composite oxide with one or more and three or less elements M added together with Ti can remarkably improve the capacity maintenance rate of the test cell, and can more effectively improve the cycle characteristics. Among them, the combinations of two and three specific elements M yield particularly remarkable improving effect.

Note that, Examples have demonstrated the cases of using Al, Sb, Sr, Si, Mg, Nb, P, and Ge as the element M, but it is presumed that the effect of improving the durability is also obtained by using, in addition to or instead of these elements, W, Mo, Ca, Na, B, V, Cr, Fe, Cu, Zn, Zr, Ru, K, and Bi.

REFERENCE SIGNS LIST

10 non-aqueous electrolyte secondary battery, 11 positive electrode, 12 negative electrode, 13 separator, 14 electrode assembly, 16 exterior housing can, 17 sealing assembly, 18, 19 insulating plate, 20 positive electrode lead, 21 negative electrode lead, 22 grooved portion, 23 internal terminal plate, 24 lower vent member, 25 insulating member, 26 upper vent member, 27 cap, 28 gasket

**Claims**

1. A positive electrode active material for a non-aqueous electrolyte secondary battery, including a lithium-transition metal composite oxide represented by the composition formula $Li_xMn_yNi_zTi_aM_bO_{2-c}F_c$, wherein M represents at least one element selected from the group consisting of P, Co, Si, Sr, Nb, W, Mo, Ca, Mg, Sb, Na, B, V, Cr, Fe, Cu, Zn, Ge, Zr, Ru, K, Bi, and Al, $1.0 < x \leq 1.2$, $0.4 \leq y \leq 0.8$, $0 \leq z \leq 0.4$, $0 < a \leq 0.03$, $0 \leq b \leq 0.05$, $0 < c \leq 0.1$, and $x+y+z+a+b \leq 2$.

2. The positive electrode active material for a non-aqueous electrolyte secondary battery according to claim 1, wherein in the composition formula $Li_xMn_yNi_zTi_aM_bO_{2-c}F_c$, M represents at least two elements selected from the group consisting of P, Co, Si, Sr, Nb, W, Mo, Ca, Mg, Sb, Na, B, V, Cr, Fe, Cu, Zn, Ge, Zr, Ru, K, Bi, and Al, and a mole ratio of M (b) satisfies $0 < b \leq 0.03$.

3. The positive electrode active material for a non-aqueous electrolyte secondary battery according to claim 2, wherein in the composition formula $Li_xMn_yNi_zTi_aM_bO_{2-c}F_c$, M represents at least two elements selected from the group consisting of Al, Sb, Sr, Si, Mg, Nb, P, and Ge.

4. The positive electrode active material for a non-aqueous electrolyte secondary battery according to claim 2, wherein in the composition formula $Li_xMn_yNi_zTi_aM_bO_{2-c}F_c$, M represents three elements including: two elements selected from the group consisting of Sb, Sr, Si, Mg, Nb, P, and Ge; and Al.

5. The positive electrode active material for a non-aqueous electrolyte secondary battery according to claim 2, wherein in the composition formula $Li_xMn_yNi_zTi_aM_bO_{2-c}F_c$, M represents three elements including: two elements selected from the group consisting of Sb, Sr, Si, and Mg; and Al.

6. The positive electrode active material for a non-aqueous electrolyte secondary battery according to any one of claims 1 to 5, wherein in the composition formula $Li_xMn_yNi_zTi_aM_bC_bO_{2-c}F_c$, a mole ratio of Ti (a) satisfies $0.002 \leq a \leq 0.02$.

7. A non-aqueous electrolyte secondary battery, comprising:

   a positive electrode including the positive electrode active material according to any one of claims 1 to 6;
   a negative electrode;
   a separator interposed between the positive electrode and the negative electrode; and
   a non-aqueous electrolyte.

Figure 1

## INTERNATIONAL SEARCH REPORT

| | International application No. |
|---|---|
| | **PCT/JP2021/047968** |

**A. CLASSIFICATION OF SUBJECT MATTER**

*C01G 53/00*(2006.01)i; *H01M 4/505*(2010.01)i; *H01M 4/525*(2010.01)i
FI:   H01M4/505; H01M4/525; C01G53/00 A

According to International Patent Classification (IPC) or to both national classification and IPC

**B. FIELDS SEARCHED**

Minimum documentation searched (classification system followed by classification symbols)

H01M4/00-4/62; C01G25/00-47/00;49/10-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2016-29655 A (TOYOTA MOTOR CORP) 03 March 2016 (2016-03-03) <br> paragraphs [0009]-[0016] | 1-7 |
| A | JP 2012-38564 A (TDK CORP) 23 February 2012 (2012-02-23) <br> claim 1, example 7, table 2 | 1-7 |
| A | JP 2015-15244 A (SAMSUNG SDI CO., LTD.) 22 January 2015 (2015-01-22) <br> claim 1, examples 9-10 | 1-7 |
| A | CN 105932321 A (BEIJING INSTITUTE OF TECHNOLOGY) 07 September 2016 (2016-09-07) <br> claim 1, examples | 1-7 |
| A | JP 2015-130273 A (HITACHI METALS LTD) 16 July 2015 (2015-07-16) <br> claim 1, paragraph [0022], example 7, table 1 | 1-7 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 February 2022** | **01 March 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2021/047968**

| Patent document cited in search report | | | Publication date (day/month/year) | Patent family member(s) | Publication date (day/month/year) |
|---|---|---|---|---|---|
| JP | 2016-29655 | A | 03 March 2016 | US 2017/0141392 A1 paragraphs [0011]-[0027] WO 2016/012851 A1 KR 10-2017-0021852 A CN 106663783 A | |
| JP | 2012-38564 | A | 23 February 2012 | US 2013/0209871 A1 claim 1, example 7, table 2 WO 2012/017826 A1 CN 103069622 A KR 10-2013-0031373 A | |
| JP | 2015-15244 | A | 22 January 2015 | US 2015/0010823 A1 claim 1, examples 9-10 EP 2822065 A2 KR 10-2015-0004645 A CN 104282879 A | |
| CN | 105932321 | A | 07 September 2016 | (Family: none) | |
| JP | 2015-130273 | A | 16 July 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 4197002 B